# EUROPÄISCHE PATENTSCHRIFT

(11) **EP 4 474 658 B1**
(45) Veröffentlichungstag und Bekanntmachung des Hinweises auf die Patenterteilung: **21.01.2026**
(21) Anmeldenummer: 23177707.9
(22) Anmeldetag: 06.06.2023
(51) Int. Cl.: F16B 5/06, E03C 1/32, E03D 11/14, F16B 21/07, F16B 21/08

(54) **WANDANKERANORDNUNG**
WALL ANCHOR ASSEMBLY
ENSEMBLE D'ANCRAGE MURAL

(43) Veröffentlichungstag der Anmeldung: 11.12.2024
(73) Patentinhaber: Geberit International AG, 8645 Jona (CH)
(72) Erfinder: LECHNER, Manuel, 8722 Kaltbrunn (CH); RAPUANO, Adriano, 8340 Hinwil (CH)
(74) Vertreter: Frischknecht, Harry Ralph

(56) Entgegenhaltungen:
- EP-A1- 3 926 112
- EP-A1- 4 039 897
- DE-U1- 29 916 234

## Beschreibung

### TECHNISCHES GEBIET

Die vorliegende Erfindung betrifft eine Wandankeranordnung, insbesondere für die Befestigung eines Montagerahmens einer Sanitärartikelanordnung, nach Anspruch 1 und eine Anordnung nach Anspruch 15.

### STAND DER TECHNIK

Aus dem Stand der Technik sind Montagerahmen zur Lagerung von Sanitärartikel bekannt geworden. Derartige Montagerahmen werden typischerweise mit einer Ankerschraube und einem Wandanker zu einer festen Tragstruktur, wie zu einer Gebäudewand, befestigt.

Die DE 299 16 234 U1 offenbart eine Schnellbefestigung, bei welcher eine C-Schiene an einer Wand befestigt wird. Ein Winkelträger wird dabei mit der C-Schiene über eine Schraubverbindung verbunden. Die Schraubverbindung muss mit einem Werkzeug fest angezogen werden. Die EP 4 039 897 A1 und die EP 4 039 897 A1 offenbaren Wandankeranordnungen umfassend einen Wandanker und ein mit dem Wandanker verbindbares Montageelement.

### DARSTELLUNG DER ERFINDUNG

Der vorliegenden Erfindung liegt eine Aufgabe zugrunde eine Wandankeranordnung anzugeben, welche in unterschiedlichen Montagekonfigurationen eingesetzt werden kann.

Diese und andere Aufgaben löst der Gegenstand nach Anspruch 1. Demgemäss umfasst eine Wandankeranordnung, insbesondere für die Befestigung eines Montagerahmens einer Sanitärartikelanordnung, einen Wandanker und ein mit dem Wandanker verbindbares Montageelement. Das Montageelement kann vor der Montage des Wandankers mit dem Wandanker verbunden werden.

Der Wandanker umfasst eine Ankerplatte mit einer Frontfläche und einer Rückfläche, einen von der Frontfläche der Ankerplatte abstehenden Befestigungsabschnitt, welcher sich entlang einer Mittelachse erstreckt, und welcher eine Gewindestruktur zur Aufnahme einer Ankerschraube aufweist, und einen von der Rückfläche abstehenden Einrastabschnitt. Weiterhin weist der Wandanker einen ersten wandankerseitigen Lagerabschnitt und einen zweiten wandankerseitigen Lagerabschnitt auf. Das Montageelement umfasst einen ersten montageelementseitigen Lagerabschnitt und einen zweiten montageelementseitigen Lagerabschnitt. Das Montagelement ist entweder über die ersten Lagerabschnitte oder über die zweiten Lagerabschnitt mit dem Wandanker verbindbar. Je nach Art der Verbindung liegt das Montageelement an unterschiedlichen Positionen zum Wandanker. Bei bereitgestellter Verbindung zwischen dem Montageelement und dem Wandanker über die beiden ersten Lagerabschnitte ist eine Drehbewegung auf den Wandanker übertragbar, so dass der Einrastabschnitt über die Drehbewegung mit einem Montageprofil verbindbar ist. Bei bereitgestellter Verbindung zwischen dem Montageelement und dem Wandanker über die beiden zweiten Lagerabschnitte überdeckt das Montageelement den Einrastabschnitt und stellt eine Auflage für den Wandanker an einer Gebäudewand bereit.

Das Montageelement kann für verschiedene Montagearten des Wandankers unterschiedliche Funktionen aufweisen. Wird der Wandanker mit seinem Einrastabschnitt mit einem Montageprofil verbunden, so dient das Montageelement als Hilfsmittel, so dass der Installateur die für die Montage notwendige Drehbewegung aufbringen kann. Wird der Wandanker direkt an eine Gebäudewand montiert, so dient das Montageelement als Auflageelement an die Gebäudewand. Durch die Überdeckung des Einrastabschnitts steht der Wandanker nicht mit dem Einrastabschnitt auf der Gebäudewand auf.

Vorzugsweise weist das Montageelement eine Lageröffnung auf, welche den ersten montageelementseitigen Lagerabschnitt bereitstellt. Weiter liegt der erste wandankerseitige Lagerabschnitt vorzugsweise aussenseitig am Befestigungsabschnitt.

Der Befestigungsabschnitt ragt dabei durch die Lageröffnung hindurch und ragt gegenüber der Ankerplatte aus der Lageröffnung hinaus, so dass der Befestigungsabschnitt zugänglich bleibt. Die Form und Grösse der Lageröffnung ist komplementär bzw. passend zur Form und Grösse des Befestigungsabschnitts ausgebildet.

Vorzugsweise wird die Lageröffnung durch eine Wandstruktur bereitgestellt wird. Die Wandstruktur weist vorzugsweise eine Länge auf, welche eine gewisse Führung für den Befestigungsabschnitt bereitstellt. Besonders bevorzugt entspricht die Länge mindestens dem Aussendurchmesser des Befestigungsabschnitts.

Vorzugsweise steht die Wandstruktur von der unten genannten Bodenwand ab. Die Öffnung erstreckt sich dabei durch die Wandstruktur und die Bodenwand hindurch.

In einer bevorzugten Variante weist der erste montageelementseitige Lagerabschnitt eine Nut auf und der erste wandankerseitige Lagerabschnitt weist einen Kamm auf. Der Kamm greift in die Nute ein. In einer anderen bevorzugten Variante weist der erste montageelementseitige Lagerabschnitt einen Kamm auf und der erste wandankerseitige Lagerabschnitt weist eine Nut auf. Bei beiden Variante greift der Kamm in die Nute ein und hierdurch kann eine drehfeste Verbindung bereitgestellt werden. Es können mehrere Nuten und mehrere Kämme vorgesehen sein.

Vorzugsweise weist das Montageelement eine Bodenwand auf, von welcher eine Seitenwand absteht, wobei die Bodenwand und die Seitenwand einen Raumbereich definieren, in welchen der Einrastabschnitt zu liegen kommt, wenn das Montageelement über die zweiten Lagerabschnitte am Wandanker gelagert ist.

Vorzugsweise weist die Bodenwand gegenüberliegend zum Raumbereich eine ebene Auflagefläche auf, mit welcher das Montageelement in Kontakt mit einer Gebäudestruktur bringbar ist.

Im montierten Zustand verläuft die Auflagefläche vorzugsweise rechtwinklig zur Mittelachse vom Befestigungsabschnitt.

Vorzugsweise weist die Ankerplatte eine Aussenkontur auf, welche mindestens teilweise komplementär zur Innenkontur des Raumbereichs ausgebildet ist.

Komplementär ist so zu verstehen, dass die Aussenkontur mindestens teilweise passend zur Innenkontur ausgebildet ist, derart, dass die Ankerplatte in den Raumbereich eingelegt werden kann.

Wenn das Montageelement über die zweiten Lagerabschnitte am Wanderanker gelagert ist, liegt der Einrastabschnitt vorzugsweise innenseitig zum Raumbereich auf der Bodenwand auf.

Vorzugsweise weisen die Ankerplatte und die Bodenwand jeweils eine deckungsgleich zueinander angeordnete Durchgangsöffnung auf, welche, wenn das Montageelement über die zweiten Lagerabschnitte am Wandanker gelagert ist, deckungsgleich zueinander liegen. Durch die Durchgangsöffnungen kann eine Schraube zur Befestigung der Wandankeranordnung an einer Gebäudewand hindurchgeführt werden.

Vorzugsweise verfügen die ersten Lagerabschnitte und/oder die zweiten Lagerabschnitte über Raststrukturen verfügen, derart, dass im montierten Zustand über die jeweiligen Lagerabschnitte eine Rastverbindung zwischen dem Wandanker und dem Montageelement bereitstellbar ist. Die Raststrukturen werden vorzugsweise durch Rastnasen und Rastkanten, an welchen die Rastnasen einrasten, bereitgestellt.

Vorzugsweise weist das Montageelement mindestens eine Anschlagsfläche auf, welche einen Anschlag für eine Beplankungsplatte bereitstellt. Die Anschlagsfläche verläuft bevorzugt parallel zur Mittelachse des Befestigungsabschnitts.

Vorzugsweise sind die ersten Lagerabschnitte und die zweiten Lagerabschnitte derart angeordnet, dass der Abstand zwischen der Mittelachse und der mindestens einen Anschlagsfläche quer zur Mittelachse gesehen, bei der Verbindung über die ersten Lagerabschnitte gleich zu der Verbindung über die zweiten Lagerabschnitte ist.

Vorzugsweise ist dem Befestigungsabschnitt ein Profilabschnitt angeformt, der sich quer zum Befestigungsabschnitt vom Befestigungsabschnitt erstreckt und von diesem absteht. Der Profilabschnitt kommt in die Lageröffnung am Montageelement zu liegen. Dabei haben die Projektion des Profilabschnitts in Richtung der Mittelachse und die Lageröffnung die gleiche Form. Der Profilabschnitt wirkt dabei als Verdrehsicherung. Ebenfalls können im Bereich der Lageröffnung und am Profilabschnitt die oben genannten Raststrukturen angeordnet sein.

Vorzugsweise weist der Befestigungsabschnitt eine Anschlagsfläche auf, an der das Montageelement anschlägt, wenn das Montageelement über die ersten Lagerabschnitte am Wandanker gelagert ist.

Anordnung umfassend mindestens eine Wandankeranordnung nach obiger Beschreibung sowie ein Montageprofil und/oder eine Gebäudewand, wobei
- bei einer Verbindung des Wandankers mit dem Montageprofil das Montageelement über die ersten Lagerabschnitte am Wandanker gelagert ist und
- wobei bei einer Verbindung des Wandankers mit der Gebäudewand das Montageelement über die zweiten Lagerabschnitte am Wandanker gelagert ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsansicht einer Wandankeranordnung nach einer ersten Ausführungsform;
- Fig. 2a: die Wandankeranordnung nach Figur 1 in einer ersten Konfiguration;
- Fig. 2b: eine Schnittdarstellung der Figur 2a;
- Fig. 3a: die Wandankeranordnung nach Figur 1 in einer ersten Konfiguration;
- Fig. 3b: eine Schnittdarstellung der Figur 3a;
- Fig. 4: die Wandankeranordnung nach den Figuren 1 bis 3b mit einer Beplankungsplatte;
- Fig. 5: eine perspektivische Explosionsansicht einer Wandankeranordnung nach einer zweiten Ausführungsform;
- Fig. 6a: die Wandankeranordnung nach Figur 5 in einer ersten Konfiguration;
- Fig. 6b: eine Schnittdarstellung der Figur 6a;
- Fig. 7a: die Wandankeranordnung nach Figur 1 in einer ersten Konfiguration;
- Fig. 7b: eine Schnittdarstellung der Figur 7a; und
- Fig. 8: die Wandankeranordnung nach den Figuren 5 bis 7b mit einer Beplankungsplatte.

### BESCHREIBUNG BEVORZUGTER AUSFÜHRUNGSFORMEN

In den Figuren werden zwei Ausführungsformen einer erfindungsgemässen Wandankeranordnung gezeigt. Gleiche Teile sind mit gleichen Bezugszeichen versehen.

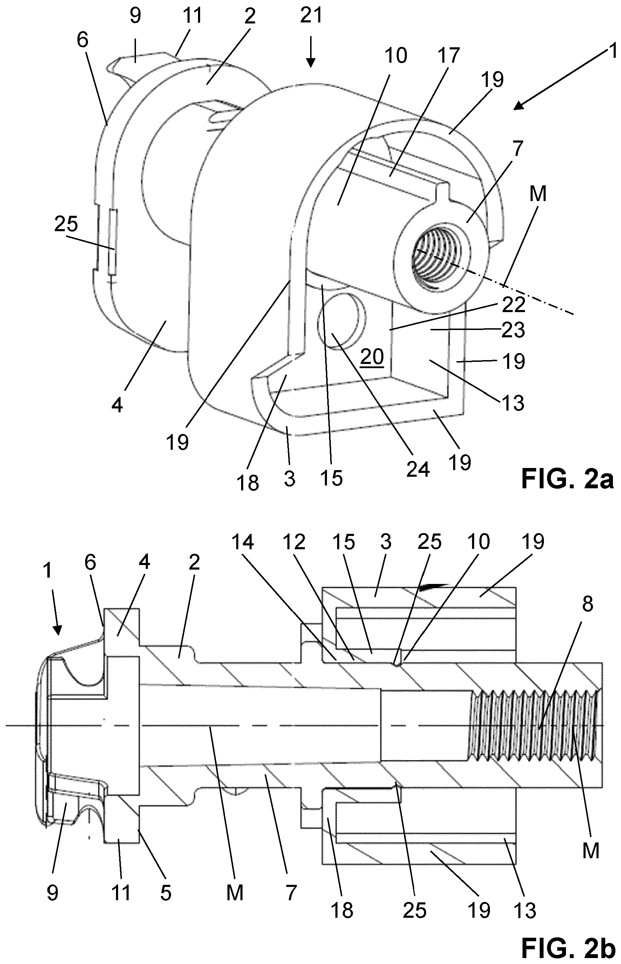

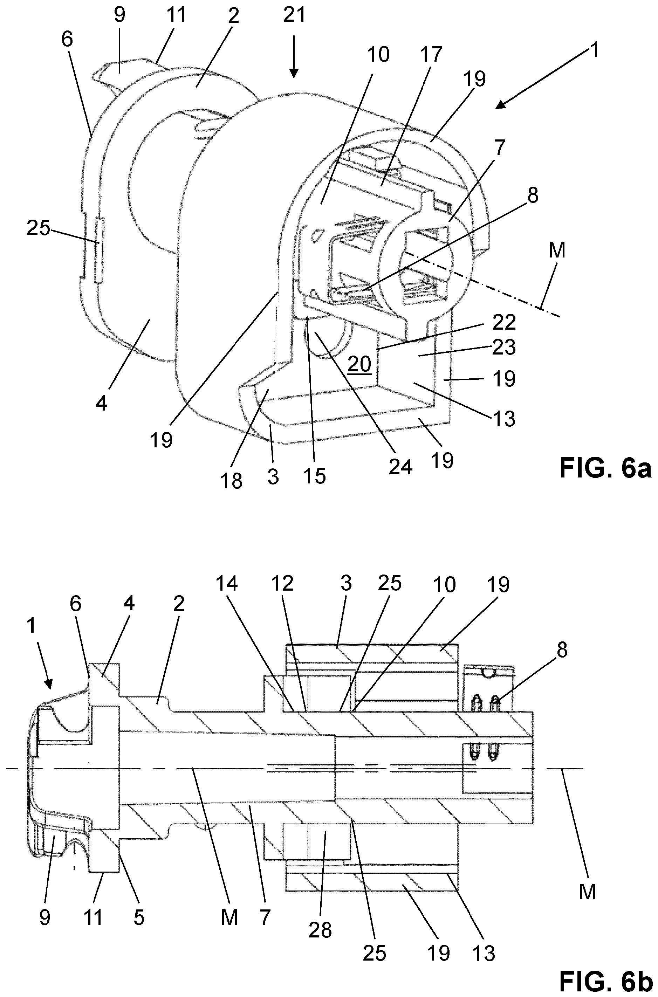

Die Wandankeranordnung gemäss beiden Ausführungsformen dient vorzugsweise der Befestigung eines Montagerahmens zur einer Gebäudestruktur bzw. zu einer Gebäudewand. Am Montagerahmen ist mindestens ein Sanitärartikel, wie beispielsweise ein Spülkasten, eine Toilettenschüssel, ein Urinal, ein Waschtsich, etc. gelagert. Die Wandankeranordnung umfasst einen Wandanker 2 und ein mit dem Wandanker 2 verbindbares Montageelement 3. Das Montageelement 3 kann, wie unten erläutert wird, auf verschiedene Weise mit dem Wandanker 2 verbunden werden. Dadurch kann das Montageelement 3 unterschiedliche Funktionen aufweisen. Gemäss einer ersten Funktionsweise dient das Montageelement 3 als Eindrehhilfe für den Wandanker 2, welche in eine Montageprofil eingedreht werden kann. Diese erste Funktionsweise wird in den Figuren 2a, 2b und 6a, 6b gezeigt. Gemäss einer zweiten Funktionsweise dient das Montageelement 3 als Abstützelement des Wandankers 2 an einer Gebäudewand, wenn der Wandanker 2 ohne Montageprofil montiert wird.

Der Wandanker 2 umfasst eine Ankerplatte 4 mit einer Frontfläche 5 und einer Rückfläche 6, einen von der Frontfläche 5 der Ankerplatte 4 abstehenden Befestigungsabschnitt 7 und einen von der Rückfläche 6 abstehenden Einrastabschnitt 9. Der Befestigungsabschnitt 7 erstreckt sich entlang einer Mittelachse M und weist eine Gewindestruktur 8 zur Aufnahme einer Ankerschraube auf. Mit der Ankerschraube kann beispielsweise der Montagerahmen mit dem Wandanker verbunden werden. Der Einrastabschnitt 9 steht von der Rückfläche 6 und dient dem Einrasten des Wandankers 2 in eine Montageschiene.

Für die Lagerung des Montageelements 3 weist der Wandanker 2 einen ersten wandankerseitigen Lagerabschnitt 10 und einen zweiten wandankerseitigen Lagerabschnitt 11 auf. Das Montageelement 3 weist einen ersten montageelementseitigen Lagerabschnitt 12 und einen zweiten montageelementseitigen Lagerabschnitt 13 auf. Das Montagelement 3 ist entweder über die ersten Lagerabschnitte 10, 12 oder über die zweiten Lagerabschnitte 11, 13 mit dem Wandanker 2 verbindbar.

In den Figuren 2a, 2b und 6a, 6b wird die Verbindung zwischen dem Montageelement 3 und dem Wandanker 2 über die beiden ersten Lagerabschnitte 10, 12 gezeigt. Bei bereitgestellter Verbindung zwischen dem Montageelement 3 und dem Wandanker 2 über die beiden ersten Lagerabschnitte 10, 12 ist eine Drehbewegung auf den Wandanker 2 übertragbar, so dass der Einrastabschnitt 9 über die Drehbewegung mit einem Montageprofil verbindbar ist. Die beiden ersten Lagerabschnitt 10, 12 stehen drehfest miteinander in Verbindung. Der Installateur kann bei der Montage des Wandankers 2 in ein Montageprofil, den Wandanker 2 am Montageelement 3 ergreifen und diesen dann über eine Drehbewegung in das Montageprofil einsetzen.

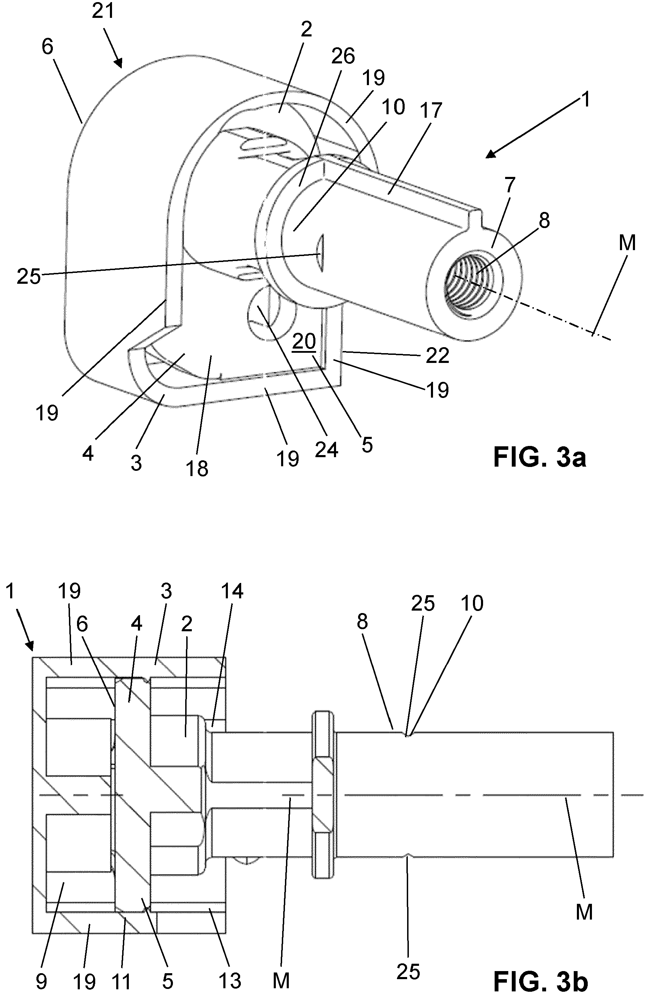

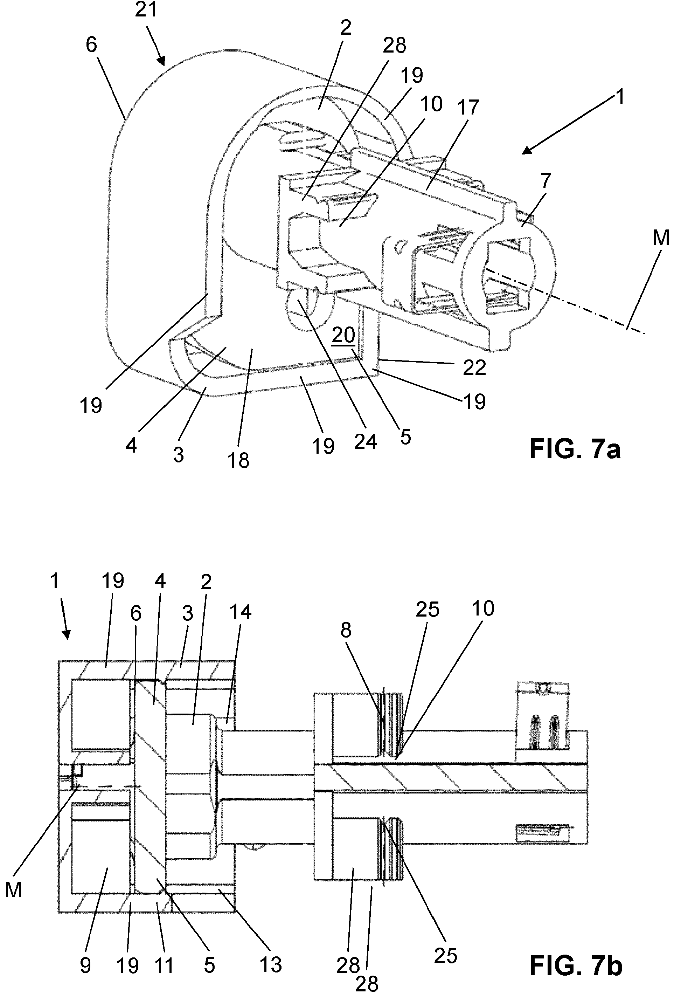

In den Figuren 3a, 3b und 7a, 7b wird die Verbindung zwischen dem Montageelement 3 und dem Wandanker 2 über die beiden zweiten Lagerabschnitte 11, 13 gezeigt Bei bereitgestellter Verbindung zwischen dem Montageelement 3 und dem Wandanker 2 über die beiden zweiten Lagerabschnitte 11, 13 das Montageelement 3 den Einrastabschnitt 9 überdeckt und eine Auflage für den Wandanker 2 an einer Gebäudewand bereitstellt. Hierdurch wird sichergestellt, dass der Wandanker 2 bei der Montage ohne Montageprofil mit dem Montageelement 3 und nicht mit dem Einrastabschnitt 9 auf der Gebäudewand aufsteht.

Das Montageelement 3 weist eine Lageröffnung 14 auf, welche den ersten montageelementseitigen Lagerabschnitt 12 bereitstellt. Der erste wandankerseitige Lagerabschnitt 10 liegt aussenseitig am Befestigungsabschnitt 7. Wenn die beiden ersten Lagerabschnitt 10, 12 miteinander in Verbindung stehen, ragt der Befestigungsabschnitt 7 durch die Lageröffnung 14 hindurch und ragt gegenüber der Ankerplatte 4 aus der Lageröffnung 14 hinaus, so dass der Befestigungsabschnitt 7 zugänglich bleibt. Die Form und Grösse der Lageröffnung ist komplementär bzw. passend zur Form und Grösse des Befestigungsabschnitts 7 ausgebildet.

Die Lageröffnung 14 wird durch eine Wandstruktur 15 bereitgestellt. Die Wandstruktur 15 steht von einer Bodenwand 18 ab. Die Lageröffnung 14 erstreckt sich dabei durch die Wandstruktur 15 und die Bodenwand 18 hindurch.

Für die drehfeste Verbindung weist der erste montageelementseitige Lagerabschnitt 12 einen Kamm 17 auf und der erste wandankerseitige Lagerabschnitt 10 weist eine Nut 16 auf, wobei der Kamm 17 in die Nute 16 eingreift. In der ersten Ausführungsform ist eine Nute 16 und ein Kamm 17 angeordnet. In der zweiten Ausführungsform sind zwei Nuten 16 und zwei Kämme 17 angeordnet. Die Nuten 16 bzw. die Kämme 17 haben jeweils unterschiedliche Breiten.

Nebst der oben genannten Bodenwand weist das Montageelement 3 weiterhin eine Seitenwand 19 auf, welche von der Bodenwand 18 absteht. Die Bodenwand 18 und die Seitenwand 19 definieren einen Raumbereich 20, in welchen der Einrastabschnitt 9 zu liegen kommt, wenn das Montageelement 3 über die zweiten Lagerabschnitte 11, 13 am Wandanker 2 gelagert ist. Es wird auf die Figuren 3a, 3b und 7, 7b verwiesen. Die Bodenwand 18 weist gegenüberliegend zum Raumbereich 20 eine ebene Auflagefläche 21 auf, mit welcher das Montageelement 3 in Kontakt mit einer Gebäudestruktur bringbar ist. Hierdurch wird eine gute Auflage der Wandankeranordnung bereitgestellt.

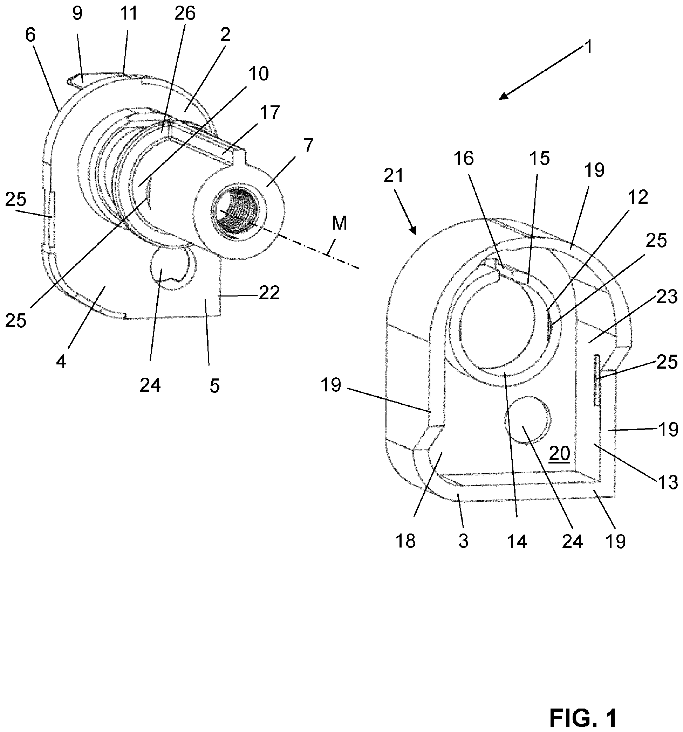

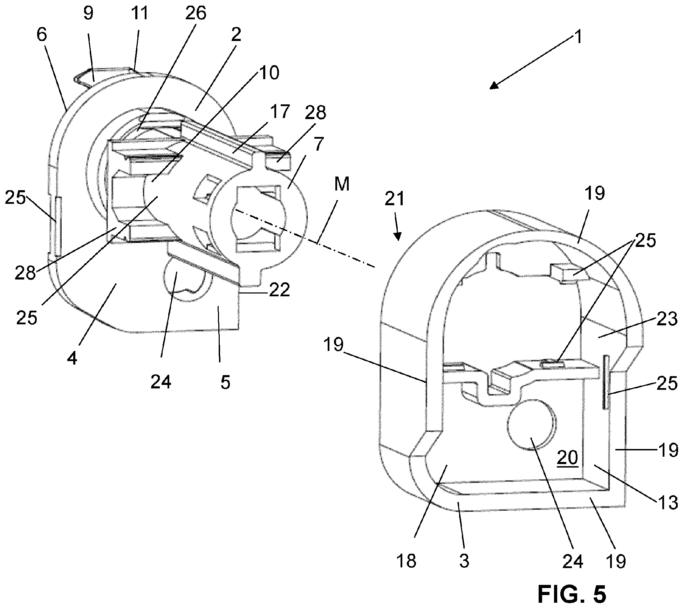

Wie von den Figuren 1 und 5 ersichtlich ist, weist die Ankerplatte 4 eine Aussenkontur 22 auf, welche mindestens teilweise komplementär zur Innenkontur 23 des Raumbereichs 20 ausgebildet ist. Komplementär ist so zu verstehen, dass die Aussenkontur mindestens teilweise passend zur Innenkontur ausgebildet ist, derart, dass die Ankerplatte 4 in den Raumbereich eingelegt werden kann. Die Aussenkontur 22 umfasst dabei mehrere Eckbereiche, wobei einer der Eckbereiche als Ecke ausgebildet ist und die anderen Eckbereiche jeweils mit einer Rundung gerundet ausgebildet sind.

Die Ankerplatte 4 und die Bodenwand 18 weisen jeweils eine deckungsgleich zueinander angeordnete Durchgangsöffnung 24 auf, welche, wenn das Montageelement 3 über die zweiten Lagerabschnitte 11, 13 am Wandanker 2 gelagert ist, deckungsgleich zueinander liegen. Die Durchgangsöffnungen 24 sind in den Figuren 1 und 5 gut erkennbar. Durch die Durchgangsöffnung 24 kann eine Schraube hindurchgeführt werden, um den Wandanker 2 zur Gebäudewand zu fixieren.

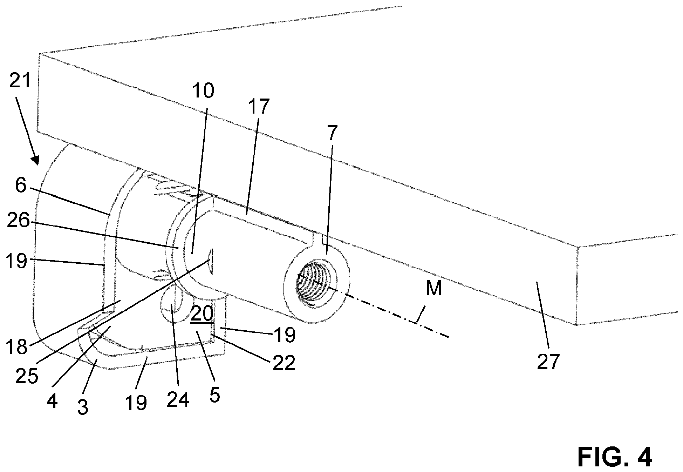

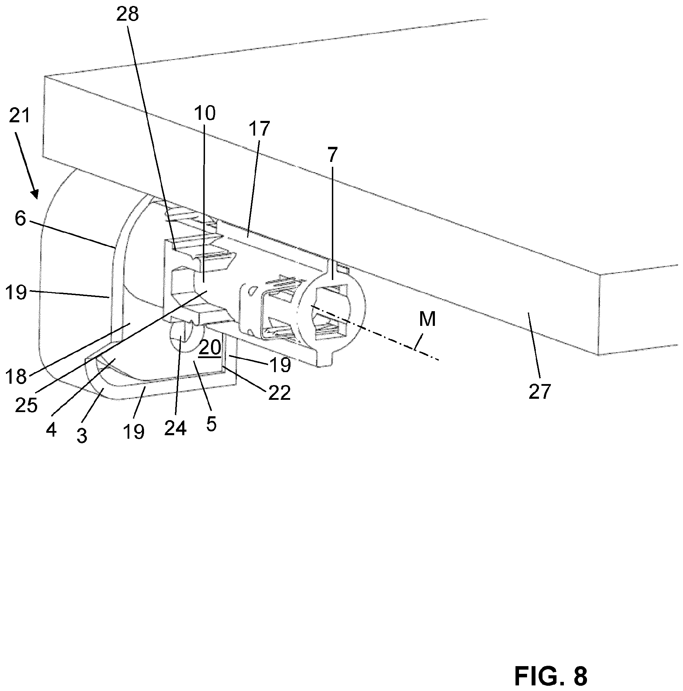

Die Figuren 4 und 8 zeigen zusätzlich zu der Wandankeranordnung 1 eine Beplankungsplatte 27. Das Montageelement 3 weist mindestens eine Anschlagsfläche auf, welche einen Anschlag für die Beplankungsplatte 27 bereitstellt. In der gezeigten Ausführungsform dient die gesamte Aussenseite des Montageelements 3 als Anschlagsfläche . Der Abstand der Anschlagsflächen zum Zentrum der Lageröffnung 14 ist dabei variabel ausgebildet, so dass unterschiedliche Abstände einstellbar sind. Die ersten Lagerabschnitte 10, 12 und die zweiten Lagerabschnitte 11, 13 sind in der gezeigten Ausführungsform derart angeordnet, dass der Abstand zwischen der Mittelachse und der mindestens einen Anschlagsfläche quer zur Mittelachse M gesehen, bei der Verbindung über die ersten Lagerabschnitte 10, 12 gleich zu der Verbindung über die zweiten Lagerabschnitte 11, 13 ist.

Der Wandanker 2 gemäss der zweiten Ausführungsform weist weiterhin einen Profilabschnitt 28 auf. Der Profilabschnitt 28 steht beidseitig vom Befestigungsabschnitt 7 ab und ist dem Befestigungsabschnitt 7 angeformt. Die Lageröffnung 14 weist eine Form auf, welche passend zum Profilabschnitt 28 ausgebildet ist. Im Bereich der Lageröffnung 14 und am Profilabschnitt 28 sind die Raststrukturen 25 angeordnet.

Vorzugsweise ist der Wandanker 2 aus einem metallischen Werkstoff und das Montageelement 3 ist aus einem Kunststoff.

Die Gewindestruktur 8 kann ein Innengewinde sein, so wie in den Figuren 1 bis 4 dargestellt, oder ein Gewindesegment sein, das Teil eines Einschiebeelementes ist welches verschiebbar am Befestigungsabschnitt 7 gelagert ist.

**BEZUGSZEICHENLISTE**

| | | | |
|---|---|---|---|
| 1 | Wandankeranordnung | 25 | Raststrukturen |
| 2 | Wandanker | 26 | Anschlagsfläche |
| 3 | Montageelement | 27 | Beplankungsplatte |
| 4 | Ankerplatte | 28 | Profilabschnitt |
| 5 | Fronfläche | M | Mittelachse |
| 6 | Rückfläche | | |
| 7 | Befestigungsabschnitt | | |
| 8 | Gewindestruktur | | |
| 9 | Einrastabschnitt | | |
| 10 | erster wandankerseitiger Lagerabschnitt | | |
| 11 | zweiter wandankerseitiger Lagerabschnitt | | |
| 12 | erster montageelementseitiger Lagerabschnitt | | |
| 13 | zweiter montageelementseitiger Lagerabschnitt | | |
| 14 | Lageröffnung | | |
| 15 | Wandstruktur | | |
| 16 | Nut | | |
| 17 | Kamm | | |
| 18 | Bodenwand | | |
| 19 | Seitenwand | | |
| 20 | Raumbereich | | |
| 21 | Auflagefläche | | |
| 22 | Aussenkontur | | |
| 23 | Innenkontur | | |
| 24 | Durchgangsöffnung | | |

## Patentansprüche

1. Wandankeranordnung (1), insbesondere für die Befestigung eines Montagerahmens einer Sanitärartikelanordnung, umfassend einen Wandanker (2) und ein mit dem Wandanker (2) verbindbares Montageelement (3),
wobei der Wandanker (2) eine Ankerplatte (4) mit einer Frontfläche (5) und einer Rückfläche (6), einen von der Frontfläche (5) der Ankerplatte (4) abstehenden Befestigungsabschnitt (7), welcher sich entlang einer Mittelachse (M) erstreckt, und welcher eine Gewindestruktur (8) zur Aufnahme einer Ankerschraube aufweist, und einen von der Rückfläche (6) abstehenden Einrastabschnitt (9) umfasst,
wobei der Wandanker (2) weiterhin einen ersten wandankerseitigen Lagerabschnitt (10) und einen zweiten wandankerseitigen Lagerabschnitt (11) aufweist,
wobei das Montageelement (3) einen ersten montageelementseitigen Lagerabschnitt (12) und einen zweiten montageelementseitigen Lagerabschnitt (13) umfasst,
wobei das Montagelement (3) entweder über die ersten Lagerabschnitte (10, 12) oder über die zweiten Lagerabschnitte (11, 13) mit dem Wandanker (2) verbindbar ist,
wobei bei bereitgestellter Verbindung zwischen dem Montageelement (3) und dem Wandanker (2) über die beiden ersten Lagerabschnitte (10, 12) eine Drehbewegung auf den Wandanker (2) übertragbar ist, so dass der Einrastabschnitt (9) über die Drehbewegung mit einem Montageprofil verbindbar ist, und
wobei bei bereitgestellter Verbindung zwischen dem Montageelement (3) und dem Wandanker (2) über die beiden zweiten Lagerabschnitte (11, 13) das Montageelement den Einrastabschnitt (9) überdeckt und eine Auflage für den Wandanker (2) an einer Gebäudewand bereitstellt.

2. Wandankeranordnung (1) nach Anspruch 1, **dadurch gekennzeichnet, dass** das Montageelement (3) eine Lageröffnung (14) aufweist, welche den ersten montageelementseitigen Lagerabschnitt (12) bereitstellt, und dass der erste wandankerseitige Lagerabschnitt (10) aussenseitig am Befestigungsabschnitt (7) liegt.

3. Wandankeranordnung (1) nach Anspruch 2, **dadurch gekennzeichnet, dass** die Lageröffnung (14) durch eine Wandstruktur (15) bereitgestellt wird.

4. Wandankeranordnung (1) nach Anspruch 2 oder 3, **dadurch gekennzeichnet, dass** der erste montageelementseitige Lagerabschnitt (12) eine Nut (16) aufweist und dass der erste wandankerseitige Lagerabschnitt (10) einen Kamm (17) aufweist, wobei der Kamm (17) in die Nute (16) eingreift; oder dass der erste montageelementseitige Lagerabschnitt (12) einen Kamm (17) aufweist und dass der erste wandankerseitige Lagerabschnitt (10) eine Nut (16) aufweist, wobei der Kamm (17) in die Nute (16) eingreift.

5. Wandankeranordnung (1) nach einem der vorhergehenden Ansprüche, **dadurch gekennzeichnet, dass** das Montageelement (3) eine Bodenwand (18) aufweist, von welcher eine Seitenwand (19) absteht, wobei die Bodenwand (18) und die Seitenwand (19) einen Raumbereich (20) definieren, in welchen der Einrastabschnitt (9) zu liegen kommt, wenn das Montageelement (3) über die zweiten Lagerabschnitte (11, 13) am Wandanker (2) gelagert ist.

6. Wandankeranordnung (1) nach Anspruch 5, **dadurch gekennzeichnet, dass** die Bodenwand (18) gegenüberliegend zum Raumbereich (20) eine ebene Auflagefläche (21) aufweist, mit welcher das Montageelement (3) in Kontakt mit einer Gebäudestruktur bringbar ist.

7. Wandankeranordnung (1) nach einem der Ansprüche 5 oder 6, **dadurch gekennzeichnet, dass** die Ankerplatte (4) eine Aussenkontur (22) aufweist, welche mindestens teilweise komplementär zur Innenkontur (23) des Raumbereichs (20) ausgebildet ist.

8. Wandankeranordnung (1) nach einem der Ansprüche 4 bis 7, **dadurch gekennzeichnet, dass**, wenn das Montageelement (3) über die zweiten Lagerabschnitte (11, 13) am Wanderanker (2) gelagert ist, der Einrastabschnitt (9) innenseitig zum Raumbereich (20) auf der Bodenwand (18) aufliegt.

9. Wandankeranordnung (1) nach einem der vorhergehenden Ansprüche 5 bis 8, **dadurch gekennzeichnet, dass** die Ankerplatte (4) und die Bodenwand (18) jeweils eine deckungsgleich zueinander angeordnete Durchgangsöffnung (24) aufweisen, welche, wenn das Montageelement (3) über die zweiten Lagerabschnitte (11, 13) am Wandanker (2) gelagert ist, deckungsgleich zueinander liegen.

10. Wandankeranordnung (1) nach einem der vorhergehenden Ansprüche, **dadurch gekennzeichnet, dass** die ersten Lagerabschnitte (10, 12) und/oder die zweiten Lagerabschnitte (11, 13) über Raststrukturen (25) verfügen, derart, dass im montierten Zustand über die jeweiligen Lagerabschnitte (10, 11, 12, 13) eine Rastverbindung zwischen dem Wandanker (2) und dem Montageelement (3) bereitstellbar ist.

11. Wandankeranordnung (1) nach einem der vorhergehenden Ansprüche, **dadurch gekennzeichnet, dass** das Montageelement (3) mindestens eine Anschlagsfläche aufweist, welche einen Anschlag für eine Beplankungsplatte (27) bereitstellt.

12. Wandankeranordnung (1) nach Anspruch 11, **dadurch gekennzeichnet, dass** die ersten Lagerabschnitte (10, 12) und die zweiten Lagerabschnitte (11, 13) derart angeordnet sind, dass der Abstand zwischen der Mittelachse und der mindestens einen Anschlagsfläche quer zur Mittelachse (M) gesehen, bei der Verbindung über die ersten Lagerabschnitte (10, 12) gleich zu der Verbindung über die zweiten Lagerabschnitte (11, 13) ist.

13. Wandankeranordnung (1) nach einem der vorhergehenden Ansprüche, **dadurch gekennzeichnet, dass** dem Befestigungsabschnitt (7) ein Profilabschnitt (28) angeformt ist, der sich quer zum Befestigungsabschnitt (7) vom Befestigungsabschnitt (7) erstreckt und von diesem absteht.

14. Wandankeranordnung (1) nach einem der vorhergehenden Ansprüche, **dadurch gekennzeichnet, dass** der Befestigungsabschnitt (7) eine Anschlagsfläche (26) aufweist, an der das Montageelement (3) anschlägt, wenn das Montageelement (3) über die ersten Lagerabschnitte (10, 12) am Wandanker (2) gelagert ist.

15. Anordnung umfassend mindestens eine Wandankeranordnung nach einem der vorhergehenden Ansprüche sowie ein Montageprofil und/oder eine Gebäudewand, wobei bei einer Verbindung des Wandankers (2) mit dem Montageprofil das Montageelement (3) über die ersten Lagerabschnitte (10, 12) am Wandanker (2) gelagert ist und wobei bei einer Verbindung des Wandankers (2) mit der Gebäudewand das Montageelement (3) über die zweiten Lagerabschnitte (11, 13) am Wandanker (2) gelagert ist.

## Claims

1. Wall anchor assembly (1), in particular for fastening a mounting frame of a sanitary article assembly, comprising a wall anchor (2) and a mounting element (3) connectable to the wall anchor (2),
wherein the wall anchor (2) has an anchor plate (4) with a front surface (5) and a rear surface (6), a fastening section (7) projecting from the front surface (5) of the anchor plate (4), which extends along a central axis (M) and has a threaded structure (8) for receiving an anchor screw, and a snap-in section (9) projecting from the rear surface (6),
wherein the wall anchor (2) further comprises a first wall anchor-side bearing section (10) and a second wall anchor-side bearing section (11),
wherein the mounting element (3) comprises a first mounting element-side bearing section (12) and a second mounting element-side bearing section (13),
wherein the mounting element (3) can be connected to the wall anchor (2) either via the first bearing sections (10, 12) or via the second bearing sections (11, 13),
wherein, when a connection is provided between the mounting element (3) and the wall anchor (2) via the two first bearing sections (10, 12), a rotational movement can be transmitted to the wall anchor (2) so that the snap-in section (9) can be connected to a mounting profile via the rotational movement, and
whereby, when the connection between the mounting element (3) and the wall anchor (2) is established via the two second bearing sections (11, 13), the mounting element covers the snap-in section (9) and provides a support for the wall anchor (2) on a building wall.

2. Wall anchor assembly (1) according to claim 1, **characterised in that** the mounting element (3) has a bearing opening (14) which provides the first bearing section (12) on the mounting element side, and **in that** the first bearing section (10) on the wall anchor side is located on the outside of the fastening section (7).

3. Wall anchor assembly (1) according to claim 2, **characterised in that** the bearing opening (14) is provided by a wall structure (15).

4. Wall anchor assembly (1) according to claim 2 or 3, **characterised in** th that the first bearing section (12) on the mounting element side has a groove (16) and that the first bearing section (10) on the wall anchor side has a comb (17), wherein the comb (17) engages in the groove (16); or that the first bearing section (12) on the mounting element side has a comb (17) and that the first bearing section (10) on the wall anchor side has a groove (16), wherein the comb (17) engages in the groove (16).

5. Wall anchor assembly (1) according to one of the preceding claims, **characterised in that** the mounting element (3) has a bottom wall (18) from which a side wall (19) protrudes, wherein the bottom wall (18) and the side wall (19) define a space area (20) in which the snap-in section (9) comes to rest when the mounting element (3) is mounted on the wall anchor (2) via the second bearing sections (11, 13).

6. Wall anchor assembly (1) according to claim 5, **characterised in that** the bottom wall (18) has a flat support surface (21) opposite the space area (20), with which the mounting element (3) can be brought into contact with a building structure.

7. Wall anchor assembly (1) according to one of claims 5 or 6, **characterised in that** the anchor plate (4) has an outer contour (22) which is at least partially complementary to the inner contour (23) of the space area (20).

8. Wall anchor assembly (1) according to one of claims 4 to 7, **characterised in that**, when the mounting element (3) is mounted on the wall anchor (2) via the second bearing sections (11, 13), the snap-in section (9) rests on the bottom wall (18) on the inside of the space area (20).

9. Wall anchor assembly (1) according to one of the preceding claims 5 to 8, **characterised in that** the anchor plate (4) and the bottom wall (18) each have a through-opening (24) arranged congruently with each other, which, when the mounting element (3) is mounted on the wall anchor (2) via the second bearing sections (11, 13), lie congruently with each other.

10. Wall anchor assembly (1) according to one of the preceding claims, **characterised in that** the first bearing sections (10, 12) and/or the second bearing sections (11, 13) have locking structures (25) such that, in the mounted state, a locking connection between the wall anchor (2) and the mounting element (3) can be provided via the respective bearing sections (10, 11, 12, 13) provide a snap connection between the wall anchor (2) and the mounting element (3).

11. Wall anchor assembly (1) according to one of the preceding claims, **characterised in that** the mounting element (3) has at least one stop surface which provides a stop for a cladding panel (27).

12. Wall anchor assembly (1) according to claim 11, **characterised in that** the first bearing sections (10, 12) and the second bearing sections (11, 13) are arranged in such a way that the distance between the central axis and the at least one stop surface, viewed transversely to the central axis (M), is the same for the connection via the first bearing sections (10, 12) as for the connection via the second bearing sections (11, 13).

13. Wall anchor assembly (1) according to one of the preceding claims, **characterised in that** a profile section (28) is formed on the fastening section (7), which extends transversely to the fastening section (7) from the fastening section (7) and protrudes from it.

14. Wall anchor assembly (1) according to one of the preceding claims, **characterised in that** the fastening section (7) has a stop surface (26) against which the mounting element (3) stops when the mounting element (3) is mounted on the wall anchor (2) via the first bearing sections (10, 12).

15. Arrangement comprising at least one wall anchor arrangement according to one of the preceding claims and a mounting profile and/or a building wall, wherein, when the wall anchor (2) is connected to the mounting profile, the mounting element (3) is supported on the wall anchor (2) via the first bearing sections (10, 12) on the wall anchor (2) and wherein, when the wall anchor (2) is connected to the building wall, the mounting element (3) is supported on the wall anchor (2) via the second bearing sections (11, 13).

## Revendications

1. Dispositif d'ancrage mural (1), en particulier pour la fixation d'un cadre de montage d'un ensemble d'articles sanitaires, comprenant un ancrage mural (2) et un élément de montage (3) pouvant être relié à l'ancrage mural (2),
l'ancrage mural (2) comportant une plaque d'ancrage (4) avec une surface avant (5) et une surface arrière (6), une partie de fixation (7) qui s'étend le long d'un axe central (M) et qui est en saillie par rapport à la surface avant (5) de la plaque d'ancrage (4) et qui présente une structure filetée (8) pour recevoir une vis d'ancrage, et une partie d'encliquetage (9) qui est en saillie par rapport à la surface arrière (6),
l'ancrage mural (2) comportant en outre une première partie d'appui côté ancrage mural (10) et une deuxième partie d'appui côté ancrage mural (11),
l'élément de montage (3) comprenant une première partie d'appui (12) côté élément de montage et une deuxième partie d'appui (13) côté élément de montage,
l'élément de montage (3) pouvant être relié à l'ancrage murale (2) soit par l'intermédiaire des premières parties d'appui (10, 12), soit par l'intermédiaire des deuxièmes parties d'appui (11, 13),
un mouvement de rotation pouvant être transmis à l'ancrage murale (2) via les deux premières sections d'appui (10, 12) lorsque la liaison entre l'élément de montage (3) et l'encrage murale (2) est établie, de sorte que la partie d'encliquetage (9) puisse être reliée à un profilé de montage via le mouvement de rotation, et
lorsque la liaison entre l'élément de montage (3) et l'ancrage mural (2) est établie, l'élément de montage recouvre la partie d'encliquetage (9) par l'intermédiaire des deux deuxièmes parties d'appui (11, 13) et fournit un support pour l'ancrage mural (2) sur un mur de bâtiment.

2. Dispositif d'ancrage mural (1) selon la revendication 1, **caractérisé en ce que** l'élément de montage (3) présente une ouverture d'appui (14) qui fournit la première partie d'appui (12) côté élément de montage, et **en ce que** la première partie d'appui 10) côté ancrage mural se trouve à l'extérieur de la partie de fixation (7).

3. Dispositif d'ancrage mural (1) selon la revendication 2, **caractérisé en ce que** l'ouverture d'appui (14) est fournie par une structure murale (15).

4. Dispositif d'ancrage mural (1) selon la revendication 2 ou 3, **caractérisé en ce que** la première partie d'appui (12) côté élément de montage présente une rainure (16) et **en ce que** la première partie d'appui (10) côté ancrage mural présente une crête (17), la crête (17) s'engageant dans la rainure (16) ; ou **en ce que** la première partie d'appui (12) côté élément de montage présente une crête (17) et **en ce que** la première partie d'appui (10) côté ancrage mural présente une rainure (16), la crête (17) s'engageant dans la rainure (16).

5. Dispositif d'ancrage mural (1) selon l'une quelconque des revendications précédentes, **caractérisé en ce que** l'élément de montage (3) comporte une paroi de fond (18) depuis laquelle s'étend une paroi latérale (19), la paroi de fond (18) et la paroi latérale (19) définissant une zone spatiale (20) dans laquelle vient se loger la partie d'encliquetage (9) lorsque l'élément de montage (3) est monté sur l'ancrage mural (2) par l'intermédiaire des deuxièmes parties d'appui (11, 13).

6. Dispositif d'ancrage mural (1) selon la revendication 5, **caractérisé en ce que** la paroi de fond (18) présente, à l'opposé de la zone spatiale (20), une surface d'appui plane (21) avec laquelle l'élément de montage (3) peut être mis en contact avec une structure de bâtiment.

7. Dispositif d'ancrage mural (1) selon l'une des revendications 5 ou 6, **caractérisé en ce que** la plaque d'ancrage (4) présente un contour extérieur (22) qui est au moins partiellement complémentaire au contour intérieur (23) de la zone spatiale (20).

8. Dispositif d'ancrage mural (1) selon l'une des revendications 4 à 7, **caractérisé en ce que**, lorsque l'élément de montage (3) est monté sur l'ancrage mural (2) par l'intermédiaire des deuxièmes parties d'appui (11, 13), la partie d'encliquetage (9) repose sur la paroi inférieure (18) à l'intérieur de la zone spatiale (20).

9. Dispositif d'ancrage mural (1) selon l'une des revendications 5 à 8 précédentes, **caractérisé en ce que** la plaque d'ancrage (4) et la paroi de fond (18) présentent chacune une ouverture de passage (24) disposée de manière à coïncider l'une avec l'autre, lesquelles, lorsque l'élément de montage (3) est monté sur l'ancrage mural (2) par l'intermédiaire des deuxièmes sections d'appui (11, 13), coïncident l'une avec l'autre.

10. Dispositif d'ancrage mural (1) selon l'une quelconque des revendications précédentes, **caractérisé en ce que** les premières parties d'appui (10, 12) et/ou les deuxièmes parties d'appui (11, 13) disposent de structures d'encliquetage (25) de telle sorte que, à l'état monté, un assemblage par encliquetage entre l'ancrage mural (2) et l'élément de montage (3) puisse être réalisé par l'intermédiaire des parties d'appui respectives (10, 11, 12, 13).

11. Dispositif d'ancrage mural (1) selon l'une quelconque des revendications précédentes, **caractérisé en ce que** l'élément de montage (3) présente au moins une surface de butée qui fournit une butée pour un panneau de revêtement (27).

12. Dispositif d'ancrage mural (1) selon la revendication 11, **caractérisé en ce que** les premières parties d'appui (10, 12) et les deuxièmes parties d'appui (11, 13) sont disposées de telle sorte que la distance entre l'axe central et l'au moins une surface de butée, vue transversalement à l'axe central (M), est la même pour la liaison par l'intermédiaire des premières parties d'appui (10, 12) et pour la liaison par l'intermédiaire des deuxièmes parties d'appui (11, 13).

13. Dispositif d'ancrage mural (1) selon l'une quelconque des revendications précédentes, **caractérisé en ce qu'**une partie profilée (28) est formée sur la partie de fixation (7), la partie profilée (28) s'étendant transversalement à la partie de fixation (7) à partir de la partie de fixation (7) et fait saillie à partir de celle-ci.

14. Dispositif d'ancrage mural (1) selon l'une quelconque des revendications précédentes, **caractérisé en ce que** la partie de fixation (7) présente une surface de butée (26) contre laquelle l'élément de montage (3) vient buter lorsque l'élément de montage (3) est monté sur l'ancrage mural (2) par l'intermédiaire des premières parties d'appui (10, 12).

15. Dispositif comprenant au moins un dispositif d'ancrage mural selon l'une quelconque des revendications précédentes ainsi qu'un profilé de montage et/ou un mur de bâtiment, dans lequel, lors d'une liaison de l'ancrage mural (2) avec le profilé de montage, l'élément de montage (3) est monté sur les premières parties d'appui (10, 12) sur l'ancrage mural (2) et dans lequel, lors de la liaison de l'ancrage mural (2) avec le mur du bâtiment, l'élément de montage (3) est monté sur l'ancrage mural (2) par l'intermédiaire des deuxièmes parties d'appui (11, 13).
